# EUROPÄISCHE PATENTSCHRIFT

(11) **EP 0 460 493 B1**
(45) Veröffentlichungstag und Bekanntmachung des Hinweises auf die Patenterteilung: **04.05.1994**
(21) Anmeldenummer: 91108623.9
(22) Anmeldetag: 28.05.1991
(51) Int. Cl.: A01D 34/66, A01D 69/12

(54) **Balkenartiges Arbeitsgerät, insbesondere Mähbalken**
Beam-like work tool, in particular a cutter bar
Outil de travail en forme de poutre, en particulier une barre de coupe

(30) Priorität: 01.06.1990 US 531604
(43) Veröffentlichungstag der Anmeldung: 11.12.1991
(73) Patentinhaber: DEERE & COMPANY, Moline, Illinois 61265 (US)
(72) Erfinder: Walters, James C., Ottumba, Iowa 52501 (US); Richardson, Craig Allen, Ottumba, Iowa 52501 (US); Verhulst, Michael Joseph, Ottumba, Iowa 52501 (US)
(74) Vertreter: Feldmann, Bernhard

(56) Entgegenhaltungen:
- DE-A- 2 023 274
- FR-A- 1 484 044
- FR-A- 2 342 017
- GB-A- 1 147 813
- US-A- 1 789 579
- US-A- 3 524 306
- US-A- 4 468 916
- US-A- 4 539 797

## Beschreibung

Die Erfindung betrifft ein balkenartiges Arbeitsgerät, insbesondere Mähbalken, nach dem Oberbegriff des Anspruchs 1. Ein derartiges Arbeitsgerät ist bereits aus der US-A-4468916 bekannt.

Balkenartige Arbeitsgeräte werden insbesondere in der Landwirtschaft eingesetzt und tragen vielmals angetriebene Arbeitswerkzeuge, wie Zinken, Messerkreisel, Mähgutbearbeitungsvorrichtungen und dergleichen.

Bei dem aus der US-A-4,468,916 bekannten als Scheibenmäher ausgebildeten Arbeitsgerät sind innerhalb eines von einem Gehäuse des Arbeitsgeräts umschlossenen Raums Zahnräder drehbar gelagert, die dem Antrieb von Mähtellern dienen. Das Gehäuse weist einen im wesentlichen keilförmigen Querschnitt in der Vertikalrichtung auf, wobei der Boden im vorderen Bereich leicht nach oben geneigt ist. Um den Verschleiß zwischen den Zahnrädern gering zu halten, muß Schmiermittel in das Gehäuse gefüllt werden, das von den Zahnrädern erfaßt werden kann. Dabei besteht stets die Gefahr, daß zuviel oder zuwenig Schmiermittel in den Raum eingefüllt wird, was in beiden Fällen zu Schäden führen kann. Ist zuwenig Schmiermittel vorhanden, reicht es nicht aus, die gesamte Kontaktfläche zu benetzen, so daß Abrieb entsteht; außerdem wird es zu schnell verschmutzt und hat eine geringe Standzeit. Ist zuviel Schmiermittel eingefüllt, kommt es zu Erhitzungen, die dessen Schmiereigenschaft herabsetzen. Bei dem bekannten Arbeitsgerät kann nur wenig Schmiermittel eingefüllt werden, da ansonsten bei der gegenüber der Horizontalen geneigten Stellung des Arbeitsgeräts zuviel Schmiermittel zu den Zahnrädern fließt und dort übermäßig erhitzt wird. Schließlich ist es schwierig, bei einer geringen Schmiermittelmenge, dessen Füllstand zuverlässig festzustellen.

Zur Erfassung der genau in dem Raum enthaltenen gesamten Schmiermittelmenge wird nach der US-A-4,539,797 ein Verfahren und eine Vorrichtung vorgeschlagen, wonach die gesamte Maschine mit dem Arbeitsgerät an einer Seite um ein vorbestimmtes Maß angehoben und der Füllstand an einer Kontrollöffnung festgestellt wird. Dieses Verfahren kann nur auf befestigten Boden ausgeführt werden und erfordert eine Vorrichtung zum Anheben der gesamten Maschine, was jeweils nachteilig ist.

Die der Erfindung zugrunde liegende Aufgabe wird darin gesehen, ein gattungsgemäßes balkenartiges Arbeitsgerät so auszubilden, daß die Gefahr des Über- oder Unterfüllens seines Raums mit Schmiermittel reduziert ist und eine ausreichende Schmiermittelmenge aufgenommen werden kann.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise ist ein ausreichend großes Reservoir zur Aufnahme von Schmiermittel außerhalb des Bewegungsraums der Antriebs- und/oder Umlenkräder vorhanden, wobei infolge der keilförmigen Ausbildung des Raums eine kleine aber ausreichende Menge des Schmiermittels mit den Antriebs- oder Umlenkrädern in Berührung kommt, wenn das Arbeitsgerät gekippt wird.

Werden in der vorgeschlagenen Weise Rippen in dem Gehäuse oder in Gehäuseabschnitten vorgesehen, die ein Hangabwärtsfließen des Schmiermittels verhindern, oder zumindest verzögern, kann sich auch an der tiefstgelegenen Stelle des Arbeitsgeräts nicht sofort beim Arbeiten am Hang eine große Schmiermittelmenge ansammeln, in der die Antriebs- und/oder Umlenkräder drehen und eine Erhitzung verursachen würden.

Auf einfache Weise kann das Schmiermittel dem Gehäuse entnommen werden, wenn es an allen Rippen vorbei zu einer Ablaßöffnung fließen kann, was durch die Verwendung von Durchlässen in den Rippen möglich ist.

Zur Kontrolle des Schmiermittel-Niveaus in dem Gehäuse werden vorteilhafterweise Schaugläser verwendet, die angesichts der in dem großen Reservoir enthaltenen Schmiermittelmenge selbst relativ groß ausgebildet sein können.

Eine übermäßige Schmiermittelerhitzung wird vermieden, wenn selbst in einer Lage, in der der flache Teil des keilförmigen Gehäuses seine tiefste Stellung einnimmt, das dann tiefste Antriebs- oder Umkehrrad nicht vollends in das Schmiermittel eintaucht; vorzugsweise wird es nur geringfügig von Schmiermittel beaufschlagt. In einer Außerbetriebsstellung hingegen werden die Antriebs- und Umkehrräder bei dann angehobenem Arbeitsgerät gar nicht aktiv geschmiert, sondern von aufgrund von Schwingungen und Erschütterungen hochspritzendem Schmiermittel.

Erstreckt sich der Boden des Gehäuses geradlinig zwischen einer langen Wand, insbesondere einer rückwärtigen, relativ hohen Wand, und der Spitze des keilförmigen Gehäuses, findet bei sich vergrößernder Neigung des Gehäuses ein im gleichen Verhältnis ansteigender Schmiermittelfluß statt; ein progressiv ansteigender Schmiermittelfluß, wie er bei dem Gehäuse nach der US-A-4,468,916 erwartet werden könnte, findet dann nicht statt.

Die angeführte Anordnung von Antriebs- und Umkehrrädern auf zwei zueinander parallelen Linien ermöglicht es, die Zahnräder einer Linie stets in Schmiermittel einzutauchen und die der anderen Linie stets außerhalb des Schmiermittels zu belassen. Die von den eintauchenden Zahnrädern aufgenommene Schmiermittelmenge wird den anderen Zahnrädern zugeschleudert und sorgt für eine ausreichende Schmierung. Auf diese Weise wird eine übermäßige Benutzung und somit Erhitzung des Schmiermittels vermieden.

Das Arbeitsgerät kann zur Ausbildung in verschiedenen Breiten auch aus Modulen zusammengesetzt werden, die dann Gehäuseabschnitte aufweisen, die in der Konstruktion der des Gehäuses nach der Erfindung entsprechen.

Die Abstände zwischen den Zahnrädern und dem Schmiermittelniveau lassen sich leicht bestimmen, und eine geringe Bauweise des keilförmigen Gehäuses des Arbeitswerkzeuges kann auch dann noch verwirklicht werden, wenn die Antriebs- und Umlenkräder als Stirnradgetriebe ausgebildet bzw. angeordnet sind.

In der Zeichnung ist ein nachfolgend näher beschriebenes Ausführungsbeispiel der Erfindung dargestellt. Es zeigt:
- Fig. 1: ein Gehäuse eines erfindungsgemäßen balkenartigen Arbeitsgerätes, in Draufsicht,
- Fig. 2: einen rechten Abschlußdeckel des Gehäuses in Seitenansicht,
- Fig. 3: einen linken Abschlußdeckel des Gehäuses in Seitenansicht,
- Fig. 4: einen Vertikalschnitt durch das Gehäuse entlang der Linie 4-4 und in Blickrichtung der dazugehörigen Pfeile in Figur 1 in vergrößerter Darstellung, wobei sich das Gehäuse in einer angehobenen Stellung befindet,
- Fig. 5: eine ähnliche Darstellung wie Figur 4, jedoch mit abgesenktem Gehäuse,
- Fig. 6: einen Teil des Gehäuses in Draufsicht und
- Fig. 7: einen Vertikalschnitt durch das Gehäuse entlang der Linie 7-7 und in Blickrichtung der dazugehörigen Pfeile in Figur 6.

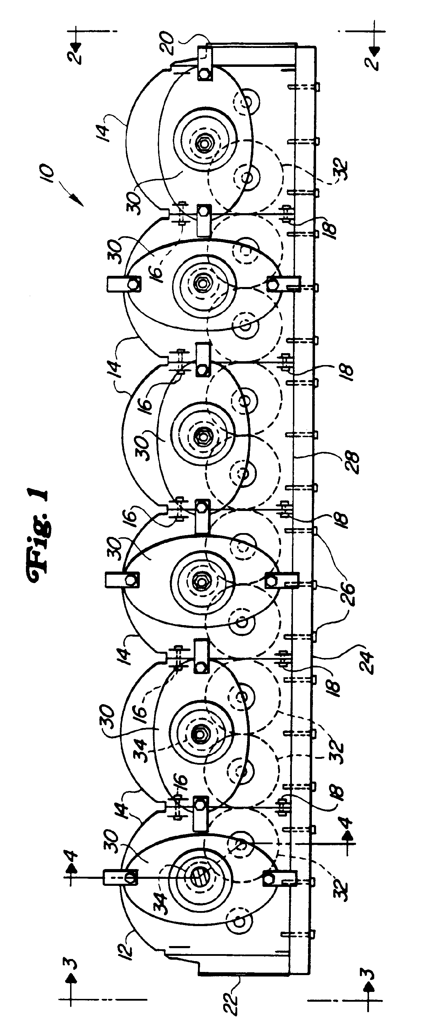

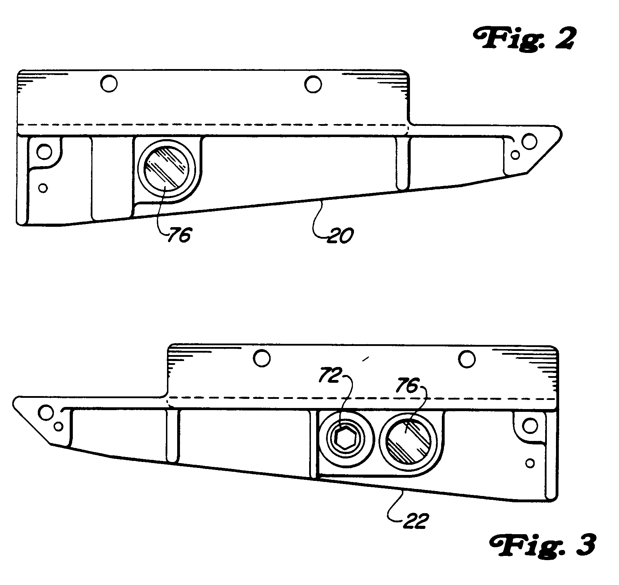

In den Figuren 1 bis 3 ist ein balkenartiges Arbeitsgerät 10 in der Art eines Mähbalkens für einen Mäher mit drehenden Schneidelementen bzw. einen Scheibenmäher gezeigt, der ein Gehäuse 12 enthält, das sich aus einer Vielzahl von Modulen 14 zusammensetzt. Jedes Modul 14 trägt entgegengesetzte Enden, die durch ebene, sich längs erstreckende Endflächen begrenzt werden, die sicher und dicht an benachbarten Endflächen eines benachbarten Moduls 14 mittels vorderer bzw. rückwärtiger Schrauben 16 bzw. 18 angelegt sind. Ein rechter und ein linker Abschlußdeckel 20, 22 sind jeweils an den äußeren Seitenflächen des äußeren rechten bzw. linken Moduls 14 sicher angebracht.

Jedes Modul 14 weist einen gegossenen Gehäuseabschnitt 23 auf, wobei die Gehäuseabschnitte 23 mittels eines rohrförmigen, quer verlaufenden Versteifungsbalkens 24 von rechteckförmigem Querschnitt miteinander verbunden sind. Der Versteifungsbalken 24 erstreckt sich hinter den Gehäuseabschnitten 23 und ist mittels Schrauben 26 an entsprechende, ebene, aufgehende Flächen von rückwärtigen Wänden 28 der Gehäuseabschnitte 23 angeschraubt. Jedes der Module 14 nimmt eine drehende Schneideinheit 30 lösbar in einer zentralen Stelle des Gehäuseabschnitts 23 auf, die mittels eines in Hintereinander- und Parallelschaltung ausgebildeten Stirnradgetriebes angetrieben werden. Hierzu ist ein ununterbrochener Antriebsstrang von hintereinander angeordneten Umlenkrädern 32 und zu diesen parallel verlaufenden Antriebsrädern 34 für die Schneideinheiten 30 vorgesehen, wobei die Antriebsräder 34 mit ausgewählten Umlenkrädern 32 in Eingriff stehen, um eine jeweils gewünschte Drehrichtung zu erreichen.

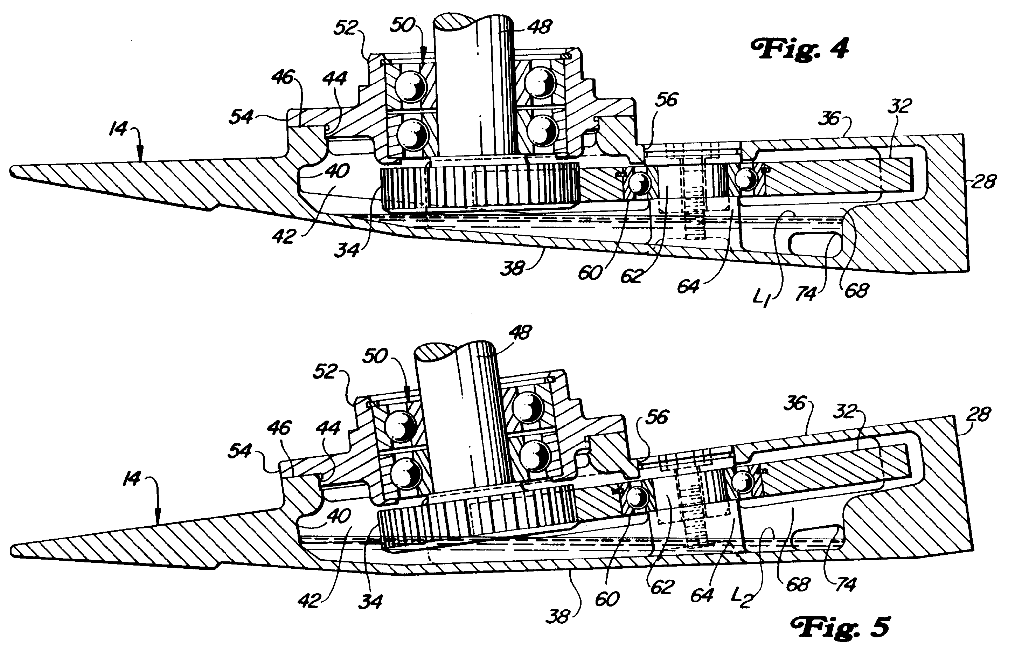

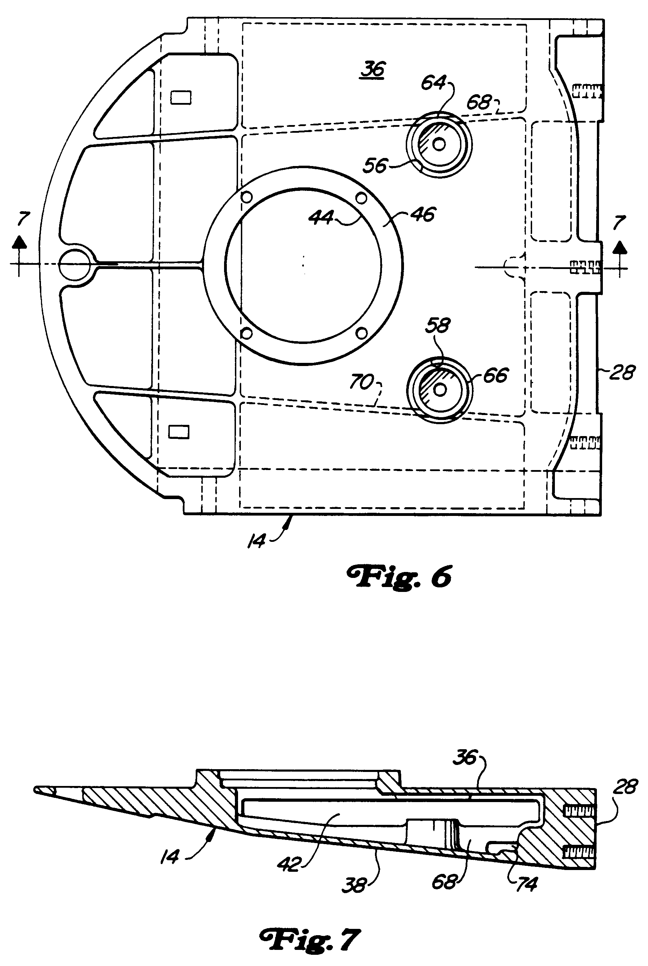

Mit Bezug auf die Figuren 4 bis 7 ist zu erkennen, daß jeder Gehäuseabschnitt 23 im vertikalen Querschnitt mehr oder weniger eine Keilform aufweist und eine in der oberen Stellung des Gehäuses im wesentlichen horizontal verlaufende Decke 36 und einen Boden 38 enthält, der von der rückwärtigen Wand 28 zu einer vorderen Wand 40 nach vorne konvergierend verläuft, so daß ein Raum 42 gebildet wird. Die Räume 42 sind in der Vertikalebene im wesentlichen ebenfalls keilförmig ausgebildet, und auch der Innenraum in den Räumen 42 weist in seiner vertikalen Erstreckung im wesentlichen eine Keilform auf. In der Decke 36 ist eine mittig angeordnete Öffnung 44 enthalten, die in den vorderen Endbereich des Raums 42 mündet und von einer nach oben gerichteten, ringförmigen Montagefläche 46 eingefaßt ist. Jedes Antriebsrad 34 ist an einen unteren Endbereich einer Antriebsspindel 48 angeformt, die drehbar in einen Lagerzusammenbau 50 eingesetzt ist. Der Lagerzusammenbau 50 ist in einem Lagergehäuse 52 mit einem Ringflansch 54 gehalten, der lösbar mit der Montageoberfläche 46 verbindbar ist, wobei das Lagergehäuse 52, der Lagerzusammenbau 50 und die Antriebsspindel 48 die Öffnung 44 verschließen. In der Decke 36 ist eine rechte und eine linke kreisförmige Öffnung 56 und 58 in gleichem Abstand zu und rückwärtig von der Öffnung 44 angeordnet. Mit Ausnahme des äußeren Moduls 14 links und rechts, die jeweils nur ein Umkehrrad 32 in dem Gehäuseabschnitt 23 aufweisen, ist in jedem Modul 14 ein Paar der Umlenkräder 32 enthalten. Die Umkehrräder 32 sind etwa mittels Lagern 60 auf Stummelwellen 62 drehbar gelagert, die mit einem vergrößerten oberen Endbereich versehen und dichtend in kreisförmigen Öffnungen 56 bzw. 58 eingesetzt sind. Die unteren Endbereiche der Stummelwellen 62 sind in zylindrischen Aufnehmern 64, 66 aufgenommen, die als ein Teil mit dem Boden 38 jeweils in axialer Flucht mit den Öffnungen 56 und 58 ausgebildet sind. Die Umlenkräder 32 sind demnach in einem rückwärtigen Bereich des Raums 40 untergebracht und nahe, sowie parallel zu der Decke 36 so angeordnet, daß sich unterhalb der Umlenkräder 32 ein beträchtlicher Freiraum ergibt, der als Schmiermittelreservoir dient. Es wird darauf hingewiesen, daß die Lagerzusammenbauten 50 als geschmierte und abgedichtete Einheiten ausgebildet sind, die keine weitere Schmierung benötigen; dies ist ratsam, da sich die Lagerzusammenbauten 50 mit einem beträchtlichen Abstand oberhalb des Schmiermittelreservoirs befinden.

Wenn sich das Arbeitsgerät 10 in der in Figur 4 gezeigten Stellung befindet, in der es mit seiner Decke 36 einen Winkel von ca. 2° zu der Horizontalen einnimmt, verläuft das Schmiermittel auf dem Niveau L1, das gut unter den Umkehrrädern 32 hindurch geht und die Antriebsräder 34 nur geringfügig unterläuft. Der Abstand zwischen den Antriebsrädern 34 und dem Niveau L1 des Schmiermittels ist derart groß bzw. klein, daß eine normale Unebenheit und Rauheit der Geländeoberfläche, über die das Arbeitsgerät 10 bewegt wird, dazu führt, daß das Schmiermittel an wenigstens einige der Antriebsräder 34 spritzt oder fließt, die dann wiederum das Schmiermittel zu den Umlenkrädern 32 bringen, sobald sie sich drehen.

Befindet sich das Arbeitsgerät 10 in der in Figur 5 gezeigten Stellung, in der seine Decke 36 zu der Horizontalen einen Winkel von ca. 8° einschließt, nimmt das Schmiermittel das Niveau L2 ein, das sich noch unterhalb der Umlenkräder 32 erstreckt, in das aber bereits ein vorderer Abschnitt jedes der Antriebsräder 34 eintaucht. Auch in diesem Fall dienen die Antriebsräder 34 der Zufuhr von Schmiermittel zu den Umlenkrädern 32.

Jeder der Gehäuseabschnitte 23 der Module 14 ist mit rechten und linken aufgehenden Rippen 68 und 70 versehen, die an dem Boden 38 angeformt sind und sich in der Längsrichtung, d. h. von vorne nach hinten zwischen den vorderen und den rückwärtigen Enden des Raums 42 erstrecken. Die Rippen 68, 70 weisen einen derartigen Abstand auf und sind so zueinander angeordnet, daß sie in Vorwärtsrichtung geringfügig konvergieren und jeweils an der äußeren Fläche der Aufnehmer 64, 66 entlangstreifen. Die Rippen 68, 70 dienen dazu, Schmiermittel davon zurück zu halten, schnell von einem Ende zu dem anderen Ende des Gehäuses 12 des Arbeitsgerätes 10 zu fließen, wenn dieses an einem Hang eingesetzt wird, wodurch die Zeit, während der die Umkehr- und Antriebsräder 32 und 34 in das Schmiermittel eintauchen, gering gehalten wird. Eine Ablaßschraube 72 ist in dem linken Abschlußdeckel 22 vorgesehen und die Rippen 68 und 70 enthalten jeweils einen Durchlaß 74, der sich in deren unteren rückwärtigen Bereich befindet, damit das Schmiermittel durch die Rippen 68, 70 zu dem linken Ende des Arbeitsgerätes 10 fließen kann. An der am linken Ende vorgesehenen Ablaßschraube 72 kann, wenn es gewünscht ist, das Schmiermittel aus dem Arbeitsgerät 10 abgelassen werden. Die Durchlässe 74 in den Rippen 68, 70 sind ausreichend klein, um den Zweck der Rippen 68, 70 nicht zu umgehen, der darin besteht, ein schnelles Fließen des Schmiermittels zu dem unteren Ende des Arbeitsgerätes 10 zu verhindern.

Das Niveau des Schmiermittels in dem Arbeitsgerät 10 kann schnell ermittelt werden, indem man durch das entsprechende kreisförmige Schauglas 76 sieht, das sich in dem rückwärtigen Bereich des linken bzw. rechten Abschlußdeckels 20, 22 befindet, und durch die man den tiefstgelegenen Bereich des keilförmigen Innenraums des Raums 42 sehen kann. Die Schaugläser 76 sind mit nicht dargestellten Skalen versehen, an denen man das Niveau des Schmiermittels in dem Arbeitsgerät 10 ablesen kann, wenn dieses zwischen seinen Ende in einer horizontalen Lage ausgeglichen ist. Hierzu wird das Arbeitsgerät 10 zunächst in die in Figur 4 gezeigte oberste Arbeitsstellung gebracht und dann mit Hilfe der Schaugläser 76 nivelliert.

Nach alledem ist zu erkennen, daß das Arbeitsgerät 10 so konstruiert ist, daß es Schmiermittel in einer solchen Menge vorhält, daß es gegen ein Über- oder Unterfüllen von Schmiermittel weniger empfindlich ist, als es der Fall wäre, wenn das Schmiermittelreservoir klein wäre. Außerdem dienen die Rippen 68, 70 dazu, die Möglichkeit zu verringern, daß Antriebsräder 34 oder auch Umkehrräder 32, die sich bei der Arbeit am Hang in unteren Bereich befinden, über eine längere Zeit während des Betriebs im Schmiermittel tauchen.

Schließlich ist erkennbar, daß es infolge des großen Schmiermittelreservoirs in dem Arbeitsgerät 10 möglich ist, große Schaugläser 76 zu verwenden, mit deren Hilfe es leicht möglich ist, das Arbeitsgerät 10 in der Lage zu nivellieren, so daß das richtige Niveau des Schmiermittels leicht abgelesen werden kann.

## Patentansprüche

1. Balkenartiges Arbeitsgerät (10), insbesondere Mähbalken, mit einem Gehäuse (12), das eine Decke (36) und einen Boden (38) aufweist und in eine derartige Stellung steuerbar ist, daß sich die Decke (36) im wesentlichen in einer horizontalen Ebene erstreckt, und mit miteinander kämmenden Antriebsrädern (34) und Umlenkrädern (32), die in geringem Abstand unter der Decke (36) angeordnet sind, wobei
a) der Boden (38) und die Decke (36) konvergierend zueinander verlaufen und einen im vertikalen Querschnitt keilförmig ausgebildeten Raum (42) bilden, der als Schmiermittel-Reservoir unterhalb der Antriebs- und Umlenkräder (34/32) nutzbar ist,
b) der Boden (38) innerhalb des Raums (42) im wesentlichen eben verläuft, dadurch gekennzeichnet, daß
c) die Antriebsräder (34) und die Umlenkräder (32) mit ihren Mittelpunkten jeweils auf einer Linie liegen, wobei die Linien zueinander parallel und in Längsrichtung des Raums (42) verlaufen, so daß eine Linie über den flachen Teil und die andere Linie über den tiefen Teil des keilförmigen Raums (42) verläuft.

2. Balkenartiges Arbeitsgerät nach Anspruch 1, dadurch gekennzeichnet, daß sich von dem Boden (38) vertikal Rippen (68, 70) erstrecken, die ein schnelles Abfließen von Schmiermittel zu einer hangunten gelegenen Seite verhindern.

3. Balkenartiges Arbeitsgerät nach Anspruch 2, dadurch gekennzeichnet, daß die Rippen (68, 70) in ihrem untersten Bereich Durchlässe (74) aufweisen, und an einem seitlichen Abschlußdeckel (20, 22) eine Ablaßöffnung vorgesehen ist.

4. Balkenartiges Arbeitsgerät nach einem oder mehreren der vorherigen Ansprüche, dadurch gekennzeichnet, daß in beiden seitlichen Abschlußdeckeln (20, 22) jeweils ein Schauglas (76) vorgesehen ist.

5. Balkenartiges Arbeitsgerät nach einem oder mehreren der vorherigen Ansprüche, dadurch gekennzeichnet, daß die Neigung des Bodens (38) und der Decke (36) so gewählt sind, daß das Niveau des Schmiermittels in jeder waagrechten Stellung des Arbeitsgeräts in einer Betriebsstellung unterhalb der Oberkante und/oder in einer Außerbetriebsstellung unterhalb der Unterkante des dann am tiefsten gelegenen Antriebs- oder Umkehrrads (34 oder 32) verläuft.

6. Balkenartiges Arbeitsgerät nach einem oder mehreren der vorherigen Ansprüche, dadurch gekennzeichnet, daß das Gehäuse (12) aus einzelnen Modulen (14) zusammengesetzt ist, die jeweils einen gemäß den vorherigen Ansprüchen mit Rippen (68, 70), Durchlässen (74) und Antriebs- und/oder Umlenkräder (34/32) versehenen keilförmigen Gehäuseabschnitt (23) aufweisen.

7. Balkenartiges Arbeitsgerät nach einem oder mehreren der vorherigen Ansprüche, dadurch gekennzeichnet, daß die Antriebs- und Umlenkräder (34 und 32) als Stirnradgetriebe ausgebildet bzw. angeordnet sind.

## Claims

1. A beam-like implement (10), especially a cutter bar, with a housing (12) having a cover (36) and a bottom (38) and which can be controlled to assume such a position that the cover (36) extends substantially in a horizontal plane, and with meshing drive gears (34) and reversing gears (32), which are arranged a small distance below the cover (36), wherein
a) the bottom (38) and the cover (36) run convergently relative to one another and form a space (42) which is wedge-shaped in vertical cross-section, which is usable as a lubricant reservoir below the drive and reversing gears (34/32),
b) the bottom (38) extends substantially flat within the space (42), characterized in that
c) the drive gears (34) and the reversing gears (32) each lie with their centre points on a line, with the lines running parallel to one another and in the longitudinal direction of the space (42), so that one line runs over the shallow part and the other line over the deep part of the wedge-shaped space (42).

2. A beam-like implement according to claim 1, characterized in that vertical ribs (68, 70) extend from the bottom (38) and prevent rapid flow of lubricant to a side hanging low on a slope.

3. A beam-like implement according to claim 2, characterized in that the ribs (68, 70) have openings (74) in their lowest regions and a drain opening is provided at one lateral cover plate (20, 22).

4. A beam-like implement according to one or more of the preceding claims, characterized in that a sight glass (76) is provided in each of the two lateral cover plates (20, 22).

5. A beam-like implement according to one or more of the preceding claims, characterized in that the inclinations of the bottom (38) and the cover (36) are so selected that the level of the lubricant in any horizontal position of the implement runs below the upper edge in an operating position and/or below the lower edge of the then lowest drive or reversing gear (34 or 32) in an out of operation position.

6. A beam-like implement according to one or more of the preceding claims, characterized in that the housing (12) can be assembled from individual modules (14), each of which comprises a wedge-shaped housing section (23) provided with ribs (68, 70), openings (74) and drive and/or reversing gears (34/32) according to the preceding claims.

7. A beam-like implement according to one or more of the preceding claims, characterized in that the drive and reversing gears (34 and 32) are formed or arranged as spur gears.

## Revendications

1. Equipement de travail (10) en forme de poutre, notamment barre de coupe, avec un carter (12) qui présente une partie de recouvrement (36) et un fond (38) et qui peut être asservi dans une position telle que la partie de recouvrement (36) s'étend essentiellement dans un plan horizontal, et avec des pignons d'entraînement (34) et des pignons de renvoi (32) en prise mutuelle, qui sont disposés à faible distance en dessous de la partie de recouvrement (36),
a) le fond (38) et la partie de recouvrement (36) convergent l'un vers l'autre et forment une chambre (42), en forme de coin en coupe transversale verticale, qui peut être utilisée comme réservoir de lubrifiant en dessous des pignons d'entraînement et de renvoi (34/32), et
b) le fond (38) s'étendant de façon sensiblement plane à l'intérieur de la chambre (42),
**caractérisé** en ce que
c) les centres des pignons d'entraînement (34) et des pignons de renvoi (32) se trouvent sur des lignes respectives, ces lignes s'étendant parallèlement entre elles et dans la direction longitudinale de la chambre (42), de sorte qu'une ligne passe par la partie plate et l'autre par la partie profonde de la chambre (42) en forme de coin.

2. Equipement de travail en forme de poutre selon la revendication 1, **caractérisé** en ce que des nervures (68, 70) s'étendent verticalement à partir du fond (38), et empêchent le lubrifiant de s'évacuer rapidement vers le côté situé en bas de la pente.

3. Equipement de travail en forme de poutre selon la revendication 2, **caractérisé** en ce que les nervures (68, 70) présentent des passages (74) dans leur région la plus basse, et une ouverture d'évacuation est prévue sur un couvercle de fermeture latéral (20, 22).

4. Equipement de travail en forme de poutre selon l'une quelconque des revendications précédentes, **caractérisé** en ce qu'un verre-regard (76) est prévu dans chacun des deux couvercles de fermeture latéraux (20, 22).

5. Equipement de travail en forme de poutre selon l'une quelconque des revendications précédentes, **caractérisé** en ce que l'inclinaison du fond (38) et l'inclinaison de la partie de recouvrement (36) sont choisies de telle sorte que le niveau du lubrifiant s'étend, dans toute position horizontale de l'équipement de travail, en dessous du bord supérieur, dans une position de service, et/ou en dessous du bord inférieur, dans une position hors service, du pignon d'entraînement ou de renvoi (34 ou 32) qui est alors le plus bas.

6. Equipement de travail en forme de poutre selon l'une quelconque des revendications précédentes, **caractérisé** en ce que le carter (12) est constitué de modules individuels (14) qui présentent chacun une partie de carter (23) en forme de coin, pourvue de nervures (68, 70), de passages (74) et de pignons d'entraînement et/ou de renvoi (34/32) selon les revendications précédentes.

7. Equipement de travail en forme de poutre selon l'une quelconque des revendications précédentes, **caractérisé** en ce que les pignons d'entraînement et de renvoi (34 et 32) sont réalisés ou disposés sous la forme d'un engrenage droit.
